Europäisches Patentamt

European Patent Office

Office européen des brevets

(11) Veröffentlichungsnummer: **0 012 364**
**B1**

(12) **EUROPÄISCHE PATENTSCHRIFT**

(45) Veröffentlichungstag der Patentschrift: **15.12.82**

(51) Int. Cl.³: **F 01 C 19/00, F 04 C 27/00**

(21) Anmeldenummer: **79104953.9**

(22) Anmeldetag: **05.12.79**

(54) **Abdichtung für Rotationskolbenmaschinen.**

(30) Priorität: **11.12.78 DE 2853423**

(43) Veröffentlichungstag der Anmeldung:
**25.06.80 Patentblatt 80/13**

(45) Bekanntmachung des Hinweises auf die Patenterteilung:
**15.12.82 Patentblatt 82/50**

(84) Benannte Vertragsstaaten:
**AT BE CH FR GB IT LU NL SE**

(56) Entgegenhaltungen:
**DE - A - 1 550 049**

(73) Patentinhaber: **RMC Rotary-Motor Company AG**
**Artherstrasse 12**
**CH-6301 Zug (CH)**

(72) Erfinder: **Kathmann, Peter B.**
**c/o O. Hinsen Bahrenfelder Steindamm 110**
**D-2000 Hamburg 50 (DE)**

(74) Vertreter: **Meyer-Plath, Henning, Dr.-Ing.**
**Maximilianstrasse 43**
**D-8000 München 22 (DE)**

Courier Press, Leamington Spa, England.

## Abdichtung für Rotationskolbenmaschinen

Die Erfindung betrifft eine Abdichtung für Rotationskolbenmaschinen mit ersten Abdichtungen zwischen den beiden Enden eines Leistungsteils und der Gehäuselauffläche sowie zweiten Abdichtungen zwischen dem Leistungsteil und den Gehäuse-Seitenscheiben. Eine derartige Abdichtung ist bereits bekannt aus der DE—B—15 50 049.

Diese Druckschrift offenbart ein Abdichtungssystem für eine Rotationskolbenmaschine mit einem von Seitenscheiben begrenzten Gehäusemantel und einem Rotor, in welchem ein radial bewegliches Leistungsteil in Form eines Kolbenschiebers angeordnet ist. Das bekannte Abdichtungssystem umfaßt eine erste Abdichtung, die zwischen dem freien Ende des Leistungsteils und der Gehäuselauffläche wirkt, sowie eine zweite Abdichtung, die zwischen den Flanken des Leistungsteils und den Gehäuse-Seitenscheiben wirkt.

Bei dem bekannten Abdichtungssystem handelt es sich somit um die gegenseitige Abdichtung von drei Körpern in zwei verschiedenen Rotationsflächen, nämlich einer durch das freie Ende des Leistungsteils definierten Umfangsfläche und einer durch die Flanken der in den Leistungsteilenden verlaufenden Dichtungen definierten Ebene.

Diese bekannte Abdichtung in zwei verschiedenen Flächen des Rotors behindert die Mediensteuerung, d.h. den Gaswechsel bei Verwendung der Rotationskolbenmaschine als Motor bzw. die Fördergutsteuerung (Flüssigkeiten und/oder Gas) bei Verwendung der Maschine als Pumpe. Das als Kolbenschieber ausgebildete Leistungsteil ist in die Rotorflanken eingearbeitet, so daß die Rotorflanken nicht für Mediensteuerungseinrichtungen, wie Gaswechselkanäle, zur Verfügung stehen.

Der Erfindung liegt die Aufgabe zugrunde, eine Abdichtung der im Oberbegriff des Anspruchs 1 angegebenen Gattung so auszubilden, daß eine einwandfreie Mediensteuerung gewährleistet ist.

Diese Aufgabe wird erfindungsgemäß dadurch gelöst, daß im Bereich zwischen den beiden Umfangskanten des Rotors und dem Leistungsteil in die Rotorumfangsfläche eingelegte dritte Abdichtungen vorgesehen sind, die die Rotorumfangsfläche jeweils zu beiden Seiten der Leistungsteilenden gegen Bereich der Gehäuselauffläche abdichten, die auf einem Umfang liegen, welcher vom Umfang verschieden ist, auf welchem die erste Abdichtung mit der Gehäuselauffläche zusammenwirkt, und daß diese dritte Abdichtung in Dichtungseingriff mit der zweiten Abdichtung ist.

Der mit Hilfe der Erfindung erzielbare technische Fortschritt ergibt sich in erste Linie daraus, daß durch Ausbildung einer Abdichtung in einer weiteren Umfangsfläche die Rotorflanken stellenweise freigehalten sind für Einrichtungen zur Mediensteuerung, wie für Schieber und/oder Ventile.

In den Unteransprüchen sind bevorzugte Ausführungsformen und vorteilhafte Einzelheiten der Erfindung beschrieben.

Der Erfindung wird im folgenden anhand von Ausführungsbeisspielen und unter Bezug auf die Zeichnung näher beschrieben. In dieser zeigt:

Figur 1 in schematische Darstellung einen Schnitt durch die Rotorbreite, wobei der Schnitt durch die Mittellinie eines im Rotor radial verschieblichen Leistungsteils gelegt ist,

Figur 2 eine perspektivische Darstellung der Elemente der Gasabdichtung in einer das Zusammenspiel der Einzelemente verdeutlichenden räumlichen Zuordnung und

Figur 3 eine zweite Ausführungsform eines Bestandteiles der Gasabdichtung.

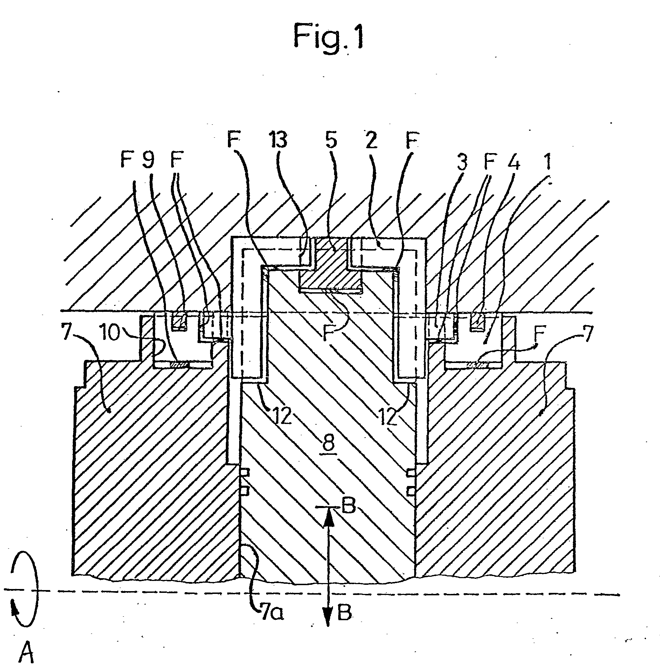

Die Gasabdichtung nach der Erfindung ist in der Zeichnung am Beispiel einer Rotationskolbenmaschine erläutert, die einen exzentrisch in einem Gehäuse drehbar gelagerten Rotor 7 und ein den Rotor radial durchsetzendes Leistungsteil 8 aufweist. Dieses Leistungsteil ist in seiner Längsrichtung beweglich innerhalb des Rotors zentrisch zum (nicht dargestellten) Gehäusemantel geführt und liegt mit seinen beiden Enden, von denen in Figur 1 nur eines dargestellt ist, in dichtender Gleitanlage am Gehäusemantel, wodurch es möglich ist, zwei in jedem Betriebszustand voneinander getrennte Arbeitskammern zu bilden.

Um solche Arbeitskammern gasdicht voneinander abzuschließen, sind ständig geschlossene Dichtgrenzen zwischen dem Gehäusemantel, dem Rotor und dem Leistungsteil ausgebildet, deren Aufbau aus der folgenden Beschreibung zweier bevorzugter Ausführungsbeispiele hervorgeht.

Figur 1, ein schematisch axial durch den Rotor 7 sowie mittig durch das Leistungsteil 8 verlaufender Teilschnitt, zeigt in der Mitte das Leistungsteil 8, welches zentrisch den Rotor 7 durchsetzt. Der Rotor dreht sich somit um seine in der Zeichnungsebene liegende, von links nach rechts verlaufende Drehachse.

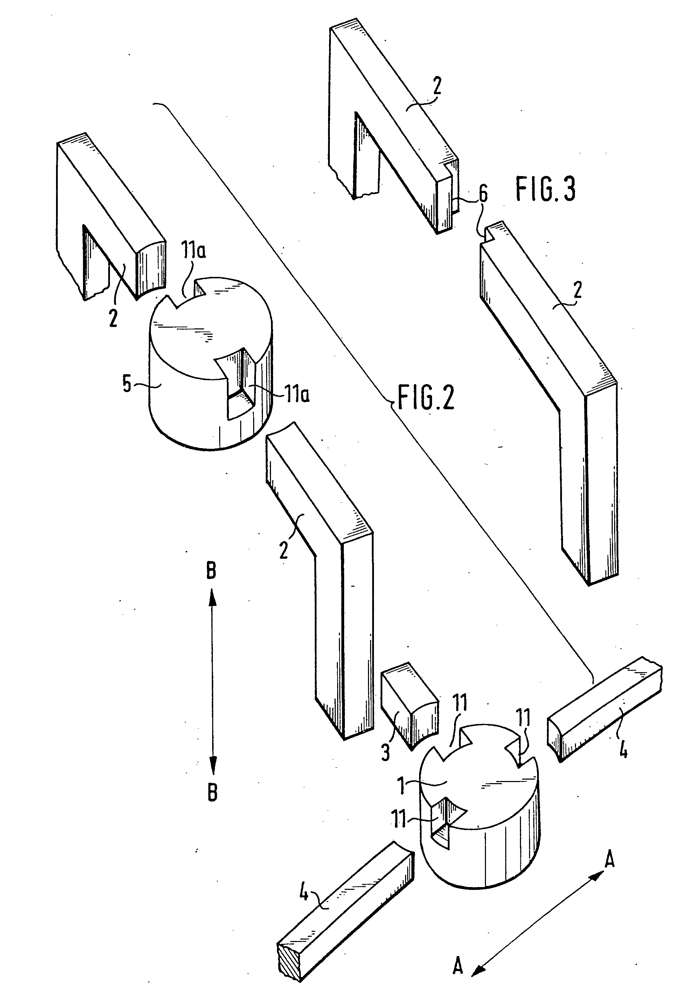

In der Flankenoberfläche des einen Kreisquerschnitt aufweisenden Rotors 7 ist in Nähe der beiden Kanten jeweils eine Nut 9 zur Aufnahme einer Umfangsdichtleiste 4 (Fig. 2) vorgesehen, wobei diese Dichtleisten jeweils aus mehreren Teilstücken zusammengesetzt sein können. Im Verlauf jeder der Nuten 9 sind ausgerichtet nach der Längsachse des Leistungsteils 8 einander gegenüberliegend Sackbohrungen 10 zur Aufnahme je eines Dichtkörpers 1 (Fig. 2) vorgesehen.

Jeder Dichtkörper 1 ist mit drei Ausschnitten 11 versehen, wovon zwei einander gegenüberliegend in der Flucht der Umfangsdichtleisten 4 ausgebildet sind und je ein Ende einer Dichtleiste aufnehmen. Der dritte Ausschnitt 11 ist im rechten Winkel zu den beiden ersten Ausschnitten angeordnet, und auf die Längsachse des Leistungsteils 8 ausgerichtet.

Es versteht sich, daß die Ausschnitte 11 jeweils so dimensioniert sind, daß die Dichtleisten sicher gehalten und dabei so angeordnet sind, daß die Dichtungsoberflächen der jeweiligen Dichtleiste und des jeweiligen Dichtkörpers miteinander fluchten und in dichtender Anlage am Gehäusemantel sind. Alle Dichtleisten, Dichtkörper sowie auch die im folgenden erst noch zu beschreibenden Winkeldichtleisten können mit Hilfe von Federn F (Fig. 1) in Richtung auf die jeweils abzudichtenden Fläche belastet sein.

Der bereits erwähnte dritte Ausschnitt 11 eines jeden Dichtkörpers 1 dient zur Aufnahme eines Endes einer Dichtleiste 3 (Fig. 2), deren anderes Ende eine Dichtgrenze mit einer von zwei an jedem Ende des Leistungsteils 8 befestigten Winkeldichtleisten 2 schließt.

Diese Querdichtleiste 3 kann nach Werkstoff- und Querschnittsgestalt den bereits beschriebenen Umfangsdichtleisten 4 gleichen. Im Gegensatz zu den Umfangsdichtleisten 4 besitzt jede Querdichtleiste 3 jedoch zwei in Dichtungseingriff stehende Flächen, nämlich zum einen eine mit dem Gehäusemantel zusammenwirkende Dichtoberfläche und zum anderen eine in Radialrichtung des Rotors verlaufende Dichtfläche, die mit einer Dichtfläche zusammenwirkt, die stets senkrecht zum zylinderförmigen Gehäusemantel steht. Diese zuletzt erwähnte Dichtfläche gehört zu einer von zwei an jedem Leistungsteilende vorgesehenen Winkeldichtleisten 2, nach denen die Querdichtleisten 3 ausgerichtet sind. Diese Winkeldichtleisten sind in Nuten 12 eingelassen, die einander gegenüberliegend in jedem Leistungsteilende ausgebildet sind. Diese Nuten 12 setzen sich in die dem Gehäusemantel zugewandten Endflächen des Leistungsteils 8 fort und bieten somit jedem der Dichtwinkel einen sicheren Sitz.

Die beiden Winkeldichtleisten 2 eines jeden Leistungsteilendes können mit Hilfe eines Dichtkörpers 5 miteinander verbunden sein, der, wie auch die Dichtkörper 1 zum Abschluß der jeweiligen Nuträume dient. Je ein Dichtkörper 5 ist mittig in jeder auf die Gehäusemantelfläche gerichteten Endfläche des Leistungsteils 8 angeordnet und sitzt in einer im Zuge der Nut 12 vorgesehenen Sackbohrung 13 (Fig. 1). Jeder Dichtkörper 5 hat in seiner Oberfläche zwei einander gegenüberliegende Ausschnitte 11a, in welche die dichtend mit dem Gehäusemantel zusammenwirkenden Schenkel der Winkeldichtleisten 2 eintauchen.

In Fig. 2 sind mit Pfeilen A—A und B—B die Bewegungsrichtungen der die einzelnen Dichtungselemente tragenden Maschinenteile veranschaulicht. Die jeweils in Rotorkantennähe angeordneten Dichtelemente 1 und 4 und die von diesen gehaltene Querdichtleiste 3, welche sich in Querrichtung zu den Dichtleisten 4 in Richtung der Rotorbreite erstreckt, laufen mit dem Rotor in Richtung des Pfeils A—A um. Die Dichtelemente 2 und 5 bewegen sich mit dem Leistungsteil 8 bei dessen Radialbewegung durch den Rotor zusätzlich in Richtung des Pfeiles B—B. Trotz dieser gegensinnigen Bewegungsabläufe wird eine gute Gasabdichtung erzielt, weil mit Hilfe der Querdichtleiste 3 die Dichtgrenze im wesentlichen geschlossen gehalten wird. Zwischen den Querdichtleisten 3 und den ihnen zugewandten senkrechten Dichtflächen der Winkeldichtleisten 2 tritt lediglich eine dichtungsgemäß gut beherrschbare Relativbewegung in Richtung des Pfeiles B—B auf, da das Leistungsteil 8 lediglich in Richtung seiner Längsachse im Rotor verschieblich gelagert ist.

Figur 3 zeigt eine zweite Ausführungsform der an den Leistungsteilenden befestigten Dichtungseinrichtung. Bei die ser Ausführungsform sind die beiden Winkeldichtleisten 2 lediglich durch eine geeignete Ausbildung ihrer Stöße 6 derart mit einander verbunden, daß eine Art Labyrinthdichtung gebildet wird. Bei der Ausführung nach Figur 3 entfällt selbstredend die in Verbindung mit Figur 1 beschrieben Sackbohrung 13, da auf den Dichtkörper 5 verzichtet wird.

Vorzugsweise ist wenigstens in dem Dichtkörper 1 ein in Verlängerung der Aufnahmenut für die Querdichtleiste 3 verlaufender Gaskanal ausgebildet, der bis unter das Dichtteil reicht, um durch Ausnutzen des Gasdruckes eine Verstärkung der Dichtwirkung zu erzielen.

Die genannten Dichtelemente gewährleisten eine im wesentlichen geschlossene Dichtgrenze, zwischen den beiden genannten Körpern als auch gegenüber einem ortsfesten oder beweglichen (umlaufenden) dritten Körper, in welchem sich der erste Körper dreht.

Aus dem Vorstehenden wird deutlich, daß bei der Abdichtung nach der Erfindung im Bereich zwischen den beiden Umfangskanten des Rotors 7 und dem Leistungsteil 8 in die Rotorumfangsfläche eingelegte dritte Abdichtungen 1, 3, 4 vorgesehen sind, die die Rotorumfangsfläche jeweils zu beiden Seiten der Leistungsteilenden gegen Bereiche der Gehäuselauffläche abdichten, die auf einem Umfang liegen, welcher vom Umfang verschieden ist, auf welchem die erste Abdichtung 2, 5 mit der Gehäuselauffläche zusammenwirkt. Ferner wird deutlich, daß jeweils ein Ende dieser dritten Abdichtung, also das nicht in einem der Dichtkörper 1 aufgenommene Ende der Querdichtleisten 3 in Dichtungseingriff mit der Winkeldichtleiste 2 ist.

Die vorstehend erwähnte dritte Abdichtung besteht aus den im Bereich der beiden Rotorkanten angeordneten Umfangsdichtleisten 4 sowie aus dem im Zuge dieser Umfangsdichtleisten vorgesehenen Dichtkörper 1 und aus den Querdichtleisten 3 die die genannten Dichtungskörper 1 mit den senkrechten Schenkeln jeder Winkeldichtleiste 2 verbinden. Diese Querdichtleisten 3 erstrecken sich senkrecht zu den Umfangsdichtleisten und sind mit ihrem freien Ende in den Dichtungskörpern 1 gehalten, während ihre anderen Enden in Dichtungsanlage an den senkrechten Schenkeln der Winkeldichtleiste 2 sind. Die Querdichtleisten 3 dichten somit auf der gleichen Umfangsfläche bzw.-ebene wie die Umfangsdichtleisten 4 und die Dichtungskörper 1.

Die Dichtleisten und Dichtkörper sowie auch die Winkeldichtleisten können aus Werkstoffen bestehen, die sich bei Rotationskolbenmaschinen bereits bewährt haben. Es versteht sich, daß zwischen den zusammenwirkenden Dichtflächen jeweils ein dünner Ölfilm vorhanden ist. Die Abdichtung nach der Erfindung ist auch für Rotationskolbenmaschinen mit mehr als einem Rotor bestimmt und vorzugsweise für den Betrieb derartiger Maschinen als Pumpen bzw. Als Motoren vorgesehen. Eine mit der erfindungsgemäßen Abdichtung versehene Rotationskolbenpumpe, die vorzugsweise mit zwei Rotoren arbeitet, zeichnet sich durch eine überraschend hohe Förderleistung aus.

**Patentansprüche**

1. Abdichtung für Rotationskolbenmaschinen mit ersten Abdichtungen (2, 5) zwischen den beiden Enden eines Leistungsteils (8) und der Gehäuselauffläche sowie zweiten Abdichtungen (2) zwischen dem Leistungsteil (8) und den Gehäuse-Seitenscheiben, dadurch gekennzeichnet, daß im Bereich zwischen den beiden Umfangskanten des Rotors (7) und dem Leistungsteil (8) in die Rotorumfangsfläche eingelegte dritte Abdichtungen (1, 3, 4) vorgesehen sind, die die Rotorumfangsfläche jeweils zu beiden Seiten der Leistungsteilenden gegen Bereiche der Gehäuselauffläche abdichten, die auf einem Umfang liegen, welcher vom Umfang verschieden ist, auf welchem die erste Abdichtung (2, 5) mit der Gehäuselauffläche zusammenwirkt und daß diese dritte Abdichtung in Dichtungseingriff mit der zweiten Abdichtung (2) ist.

2. Abdichtung nach Anspruch 1, dadurch gekennzeichnet, daß die dritte Abdichtung (1, 3, 4) aus dem Umfang des Rotors (7) folgenden, in Nähe der beiden Rotorkanten angeordneten Umfangsdichtleisten (4), aus im Zuge dieser Umfangsdichtleisten vorgesehenen Dichtungskörpern (1) sowie aus diese Dichtungskörper mit der zweiten Abdichtung (2) verbindenden Querdichtleisten (3) besteht, die sich senkrecht zu den Umfangsdichtleisten erstrecken und mit einem Ende in den Dichtungskörpern (1) gehalten sind und mit ihren freien Enden in Dichtungseingriff mit den zweiten Abdichtungen (2) sind.

3. Abdichtung nach Anspruch 2, dadurch gekennzeichnet, daß die Querdichtleisten (3) auf der gleichen Umfangsfläche wie die Umfangsdichtleisten (4) und die Dichtungskörper (1) abdichten.

4. Abdichtung nach einem der Ansprüche 1 bis 3, dadurch gekennzeichnet, daß die zweiten Abdichtungen (2) als zweite Schenkel von Winkeldichtleisten ausgebildet sind, deren erste, horizontale Schenkel die Enden des Leistungsteils (8) gegen die Gehäuselaufbahn im Rahmen der ersten Abdichtung (2, 5) abdichten und deren zweite, vertikale Schenkel mit den freien Enden der Querdichtleisten (3) zusammenwirken.

5. Abdichtung nach Anspruch 4, dadurch gekennzeichnet, daß an jedem Ende des Leistungsteils (8) zwei Winkeldichtleisten (2) vorgesehen sind, deren Horizontalschenkel im wesentlichen gasdicht miteinander verbunden sind.

6. Abdichtung nach Anspruch 5, dadurch gekennzeichnet, daß die Horizontalschenkel jeder Winkeldichtleiste (2) mittels eines Verbindungsdichtungskörpers (5) miteinander verbunden sind.

7. Abdichtung nach Anspruch 5, dadurch gekennzeichnet, daß die Horizontalschenkel jeder Winkeldichtleiste (2) durch geeignete Ausbildung ihrer Stoßkonfigurationen (6) miteinander verbunden sind.

8. Abdichtung nach einem der Ansprüche 1 bis 7, dadurch gekennzeichnet, daß jeder Dichtungskörper (1) drei Einschnitte (11) aufweist, von welchen zwei einander gegenüberliegen und der dritte Einschnitt im rechten Winkel zu den beiden ersten Einschnitten vorgesehen ist.

9. Abdichtung nach Anspruch 8, dadurch gekennzeichnet, daß der dritte Einschnitt (11) nach der Winkeldichtleiste (2) ausgerichtet ist, um ein Ende der Querdichtleiste (3) aufzunehmen.

**Revendications**

1. Joint d'étanchéité pour machines à piston rotatif comprenant des premiers moyens d'étanchéité (2, 5) entre les deux extrémités d'un organe moteur (8) et la surface d'appui du carter ainsi que des deuxièmes moyens d'étanchéité (2) entre l'organe moteur (8) et les plaques latérales du carter, caractérisé en ce que dans la zone entre les deux bords périphériques du rotor (7) et l'organe moteur (8) sont prévus des troisièmes moyens d'étanchéité (1, 3, 4) insérés dans la surface périphérique du rotor qui forment étanchéité entre la surface périphérique du rotor de chacun des deux côtés des extrémités de l'organe moteur et des zones de la surface d'appui du carter qui sont situées sur une circonférence différente de celles suivant laquelle les premiers moyens d'étanchéité (2, 5) co-opèrent avec la surface d'appui du carter et en ce que ces troisièmes moyens d'étanchéité sont en contact étanche avec les deuxièmes moyens d'étanchéité (2).

2. Joint selon la revendication 1, caractérisé en ce que les troisièmes moyens d'étanchéité (1, 3, 4) comprennent des barrettes d'étanchéité périphériques (4) disposées suivant la périphérie du rotor (7) à proximité des deux bords du rotor, des organes d'étanchéité (1) prévus dans le passage de ces barrettes d'étanchéité périphériques ainsi que des barrettes d'étanchéité transversales (3) reliant ces organes d'étanchéité avec les deuxièmes moyens d'étanchéité (2), lesquelles barrettes (3) s'étendent perpendiculairement aux barrettes d'étanchéité périphériques, sont maintenues par une extrémité dans les organes d'étanchéité (1) et sont en contact étanche par leurs extrémités libres avec les deuxièmes moyens d'étanchéité (2).

3. Joint selon la revendication 2, caractérisé en ce que les barrettes d'étanchéité transversales (3) s'appuient à étanchéité sur les mêmes surfaces périphériques que les les barrettes d'étanchéité périphériques (4) et les organes d'étanchéité (1).

4. Joint selon l'une quelconque des revendications 1 à 3, caractérisé en ce que les deuxièmes moyens d'étanchéité (2) sont constitués en tant que deuxièmes branches de barrettes d'étanchéité angulaires dont les premières branches horizontales étanchéifient les extrémités de l'organe moteur (8) contre le chemin de glissement du carter dans le cadre des premiers moyens d'étanchéité (2, 5), et dont les deuxièmes branches verticales coopèrent avec les extrémités libres des barrettes d'étanchéité transversales (3).

5. Joint selon la revendication 4, caractérisé en ce qu'à chaque extrémité de l'organe moteur (8) sont prévues deux barrettes d'étanchéité angulaires (2) dont les branches horizontales sont reliées entre elles de façon sensiblement étanche aux gaz.

6. Joint selon la revendication 5, caractérisé en ce que les branches horizontales de chaque barrette d'étanchéité angulaire (2) sont reliées entre elles par l'intermédiaire d'un organe d'étanchéité de liaison (5).

7. Joint selon la revendication 5, caractérisé en ce que les branches horizontales de chaque barrette d'étanchéité angulaire (2) sont reliées entre elles par une conformation appropriée de leurs parties jointives.

8. Joint selon l'une quelconque des revendications 1 à 7, caractérisé en ce que chaque organe d'étanchéité (1) présente trois évidements (11) parmi lesquels deux sont situés face à face et le troisième évidement est prévu à angle droit par rapport aux deux premiers évidements.

9. Joint selon la revendication 8, caractérisé en ce que le troisième évidement (11) est aligné avec la barrette d'étanchéité angulaire (2) pour recevoir une extrémité de la barrette d'étanchéité transversale (3).

**Claims**

1. A sealing system for rotary piston engines comprising first sealing means (2, 5) between the two ends of a power member (8) and the housing track, and second sealing means (2) between the power member (8) and the housing side plates, characterised in that third sealing means (1, 3, 4) inserted into the circumferential surface of the rotor are provided in the region between the two circumferential edges of the rotor (7) and the power member (8) and seal off the rotor circumferential surface, on both sides of the power member ends in each case, from areas of the housing track which are situated over a circumference which differs from the circumference on which the first sealing means (2, 5) co-operates with the housing track, and said third sealing means is in sealing engagement with the second sealing means (2).

2. A sealing system according to claim 1, characterised in that the third sealing means (1, 3, 4) consists of circumferential sealing strips (4) disposed near the two rotor edges and following the circumference of the rotor (7), sealing members (1) provided in line with said circumferential sealing strips, and transverse sealing strips (3) which connect said sealing members to the second sealing means (2) and which extend at right angles to the circumferential sealing strips and which are mounted by one end in the sealing members (1) and are in sealing engagement with the second sealing means (2) by their free ends.

3. A sealing system according to claim 2, characterised in that the transverse sealing strips (3) provide a seal over the same circumferential surface as the circumferential sealing strips (4) and the sealing members (1).

4. A sealing system according to any one of claims 1 to 3, characterised in that the second sealing means (2) are constructed as second limbs of angular sealing strips, the first horizontal limbs of which seal the ends of the power member (8) from the housing track within the limits of the first sealing means (2, 5) and the second vertical limbs of which co-operate with the free ends of the transverse sealing strips (3).

5. A sealing system according to claim 4, characterised in that two angular sealing strips (2) are provided at each end of the power member (8) and their horizontal limbs are interconnected so as to be substantially gas-tight.

6. A sealing system according to claim 5, characterised in that the horizontal limbs of each angular sealing strip (2) are interconnected by means of one connecting sealing member (5).

7. A sealing system according to claim 5, characterised in that the horizontal limbs of each angular sealing strip (2) are interconnected by a suitable construction of their abutment configurations (6).

8. A sealing system according to any one of claims 1 to 7, characterised in that each sealing member (1) has three incisions (11), two of which are situated opposite one another while the third is disposed at a right angle to the first two.

**0 012 364**

9. A sealing system according to claim 8, characterised in that the third incision (11) is aligned towards the angular sealing strip (2) in order to accommodate one end of the transverse sealing strip (3).

# Fig.1

FIG.3

FIG.2